Europäisches Patentamt

European Patent Office

Office européen des brevets

(11) Publication number: **0 654 454 A1**

# EUROPEAN PATENT APPLICATION

(21) Application number: **94308134.9**

(22) Date of filing: **04.11.94**

(51) Int. Cl.⁶: **C04B 24/26**, C08F 265/06,
C08F 257/02, C08F 265/04,
C08F 2/22

(30) Priority: **22.11.93 US 156199**

(43) Date of publication of application:
**24.05.95 Bulletin 95/21**

(84) Designated Contracting States:
**BE CH DE ES FR GB IT LI NL SE**

(71) Applicant: **ROHM AND HAAS COMPANY**
**100 Independence Mall West**
**Philadelphia,**
**Pennsylvania 19106-2399 (US)**

(72) Inventor: **von Trentini, Min-Chi Tsai**
**363 Robin Hood Drive**
**Yardley,**
**Pennsylvania 19067 (US)**
Inventor: **Winey, Donald Alfred**
**358 Rettop Place**
**Warminster,**
**Pennsylvania 18974 (US)**
Inventor: **Ci, Xiaohong**
**2124 Miller Place**
**Hatfield,**
**Pennsylvania 19440 (US)**

(74) Representative: **Tanner, James Percival et al**
**ROHM AND HAAS (UK) LTD.**
**European Operations Patent Department**
**Lennig House**
**2 Mason's Avenue**
**Croydon CR9 3NB (GB)**

(54) **A core-shell polymer powder.**

(57) The present invention relates to a core-shell polymer powder produced by a two-stage aqueous emulsion sequential process which is particularly useful as an acrylic modifier for cementitious materials such as, for example, tile thinset mortar, waterproofing slurry, patching, adhesives for insulation foam, and flooring compound.

The core-shell polymer powders of this invention have excellent physical properties and, when used as a cement modifier, provide excellent mortar properties in thin section application; provide adhesion to a variety of substrates; and provide improved mortar flexibility in dry and wet environments.

The present invention relates to a core-shell polymer powder. The core-shell polymer powder is produced by a two-stage aqueous emulsion sequential process and is particularly useful as an acrylic modifier for cementitious materials such as, for example, tile thinset mortar, waterproofing slurry, patching, adhesive for insulation foam, and flooring compound.

In order to achieve maximum utility, i.e. trouble-free, long-term service from the installation of ceramic and stone-ware tiles, polymers employed in the tile mortar must be capable of adapting to high humidity environments, various surfacing materials and a variety of substrates, while performance requirements, such as, flexibility, impact resistance, wear, and water sensitivity, are maintained.

Today's market requires a variety of ceramic tiles to be applied using polymers which are flexible and capable of absorbing differential movements between the tile and a variety of substrates. For example, ceramic tiles must be installed directly over partially cured or lightweight concrete, pre-cast concrete slabs, asphalt, plywood, dry wall panels and other non-traditional substrates.

Originally, two systems provided the required degree of flexibility: ready-to-use adhesive paste-type systems and chemical reactive adhesives-type systems. Ready-to-use adhesives, although flexible, are generally extremely water sensitive and cannot be used in exterior installations, and they are not useful in situations where they are constantly immersed below water, such as pools, fountains and Jacuzzis®. Chemical reactive adhesives systems, although very flexible, are generally two-component systems which require proper mixing before use. Also, chemical adhesive systems are not environmentally friendly and require adequate ventilation during both installation and curing.

What is required is a single package, polymer-modified Portland cement mortar which adheres to non-traditional substrates, which is environmentally friendly, which is flexible, impact and wear resistant, while chemical and physical properties, such as water resistance, are maintained.

DE 40 21 216 A1 discloses an aqueous polymer dispersion containing a film-forming dispersion polymer as the dispersed phase, and a fully, or partially neutralized, water-soluble copolymer in the aqueous phase consisting of an olefinically unsaturated dicarboxylic acid, $C_3$-$C_{12}$ alkenes, and addition free-radical polymerizable monomers. This dispersion is subsequently converted to powder form.

JP 04-185606 discloses a redispersible acrylate resin emulsion powder composition and a method for its preparation, in which an acrylate resin emulsion having a specific polyvinyl alcohol-type protective colloidal as the emulsifying agent is converted into powder form.

In accordance with the present invention there is provided a core-shell polymer powder obtainable by a two-stage aqueous emulsion sequential polymerization method comprising:

(a) forming in a first stage a mixture of monomers comprising from 10 to 30 percent of a carboxylic acid or anhydride, from 90 to 30 percent of an alkyl acrylate or alkyl methacrylate or styrene, and from 0 to 40 percent of a hydroxyalkyl ester of a carboxylic acid or acrylamide or methacrylamide,

(b) polymerizing the mixture from (a) to form a shell polymer,

(c) neutralizing the shell with an amine or a base; and in a second stage,

(d) forming a mixture of monomers comprising from 90 to 100 percent of an alkyl acrylate or methacrylate or styrene and from 0 to 10 percent of a hydroxyalkyl ester of a carboxylic acid or acrylamide or methacrylamide to produce a calculated Tg of 0°C to (minus) -65°C;

(e) combining the mixture of monomers of the second-stage with the neutralized polymer of the first stage;

(f) polymerizing the combined monomers of the second stage to form the aqueous emulsion core-shell polymer; and,

(g) converting the aqueous emulsion core-shell polymer by spray-drying into a redispersable polymer powder.

In accordance with the present invention there is also provided a method for modifying a cementitious composition, comprising admixing the core-shell polymer powder with Portland cement and adding the admixture to the cementitious composition.

The core-shell polymer powders of this invention have excellent physical properties and, when used as a cement modifier, provide excellent mortar properties in thin section application; provide adhesion to a variety of substrates; and provide improved mortar flexibility in dry and wet environments.

The present invention provides a redispersible core shell emulsion powder which is particularly useful in modifying cementitious materials, and results in excellent flexibility, water resistance, and physical properties such as flexural properties.

An advantage of the present polymer-modified cement is that it maintains its flexibility over a longer period of time without becoming brittle. Also, while the present polymer is water-based, it maintains physical properties such as stress, strain and modulus when used in high humidity or water-containing environments.

The present invention relates to core-shell polymers produced by a two-stage aqueous emulsion sequential process and their subsequent use as a solid modifier for cementitious materials. By utilizing the process of this invention, a core-shell emulsion polymer product may be produced in which the core-shell polymers have an alkali-insoluble polymer core and an alkali-soluble polymer shell. The core and shell of the core-shell polymer are chemically-grafted together to a significant or substantial extent such that the core and shell are permanently attached. Upon dissolving the shell of the chemically-grafted core-shell polymer with alkali, a significant portion of the shell remains permanently attached to the core.

It is the permanent attachment of the shell and core through chemical grafting which is believed to provide stability to the core-shell polymer and physical properties, such as flexibility, to the cementitious mixtures which were previously unrealized using prior core-shell processes, as well as processes involving polymer blends and polymer mixtures.

There are two techniques for preparing the grafted core-shell polymers. Technique (1): emulsion polymerization of a mixture of monomers comprising a carboxylic acid or anhydride and an alkyl acrylate or alkyl methacrylate or styrene or substituted styrene, acrylamide or methacrylamide or hydroxyalkyl ester of a carboxylic acid in the presence of a polyfunctional monomer to form a shell polymer; neutralizing the previously formed shell with an amine or base; and, in a second stage, forming a mixture of monomers comprising an alkyl acrylate or methacrylate, styrene or substituted styrene and a hydroxyalkyl ester of a carboxylic acid or acrylamide or methacrylamide, methylolated acrylamide or methacrylamide; and combining the second-stage monomers with the first stage and polymerizing the mixture to form the core-shell polymers of this invention.

Technique (2) (according to US-A-4,916,171): emulsion polymerization of a mixture of monomers comprising an alkyl acrylate or methacrylate and a hydroxyalkyl ester of a carboxylic acid or acrylamide or methacrylamide in the presence of, optionally, a polyfunctional monomer to form a core polymer; and, in a second stage, forming a mixture of monomers comprising a carboxylic acid or anhydride and an alkyl acrylate or alkyl methacrylate, combining the second-stage monomers with the first stage, and polymerizing the mixture to form the core-shell polymers.

Technique (2) core shell polymers may be prepared by an "inverse core shell" process such as disclosed in US-A-4,876,313. Inverse core shell polymers are those where the second stage polymer becomes the core and are surrounded by the shell, which is the first stage polymer. These inverse compositions can be formed when the first stage polymer is more hydrophilic than the second stage monomer (Lee and Ishikawa, The Formation of Inverted Core Shell Latexes, J. Poly. Sci., Vol. 21, pp. 147-154 (1983)).

Suitable monofunctional monomers for the preparation of the core and the shell polymers are selected from the group consisting of methyl acrylate, ethyl acrylate, butyl acrylate, 2-ethylhexyl acrylate, decyl acrylate, methyl methacrylate, ethyl methacrylate, hydroxyethyl methacrylate, hydroxypropyl acrylate, hydroxypropyl methacrylate, butyl methacrylate, acrylonitrile, acrylic acid, methacrylic acid, itaconic acid, maleic acid, fumaric acid, acrylic anhydride, methacrylic anhydride, methylolated acrylamide and methylolated methacrylamide, methacrylamide, acrylamide, divinyl benzene, half esters of maleic/fumaric/itaconic acid, maleic anhydride, itaconic anhydride, styrene, substituted styrene, vinyl acetate and other $C_1$ to $C_{12}$ alkyl acrylates and methacrylates.

The weight ratio of the core polymer to the shell polymer is preferably about 60:40 to about 95:05, more preferably about 75:25 to about 90:10, and most preferably about 80:20 to about 90:10. Preferably, the core polymer has a weight average molecular weight greater than about 100,000, and the shell polymer has a weight average molecular weight of about 2,500 to about 12,000 as determined by aqueous gel permeation chromatography on the hydrolyzed sample. Preferably, the glass transition temperature (Tg) calculated by the "Fox Equation" of the core polymer is from about (minus) -65°C to about 0°C, and preferably from about (minus) -25°C to about (minus) -10°C, and the Tg of the shell is greater than 50°C.

The core and the shell components of the present invention may be chemically grafted together by carrying out the emulsion polymerization of the core in the presence of a polyfunctional compound, such as those described in US-A-4,876,313.

Polyfunctional compounds useful in chemically grafting the core and shell together are selected from (a) polyfunctional compounds having two or more sites of unsaturation, (b) reactive chain transfer agents having two or more abstractable atoms, and (c) hybrid polyfunctional compounds having one or more sites of unsaturation and one or more abstractable atoms. Compounds such as the glycidyl-containing vinyl monomers and vinyl isocyanates, described in US-A-4,565,839, are not suitable as polyfunctional compounds for this invention because they do not work to graft the core to the shell in aqueous-based emulsion polymerizations.

The polyfunctional compounds useful in the two-stage process of this invention are selected from the group consisting of allyl-, methallyl-, vinyl-, dicylopentenyl and crotyl-esters of acrylic, methacrylic, maleic (mono- and di-esters), fumaric (mono- and di-esters) and itaconic (mono- and di-esters) acids; allyl-, methallyl-, and crotyl, -vinyl ether and thioether; N- and N,N-di-allyl-, methallyl-, crotyl-, and vinyl-amides of acrylic and methacrylic acids; N-allyl-, methallyl-, and crotyl-maleimide; vinyl esters of 3-butenoic and 4-pentenoic acids; diallyl phthalate; triallyl cyanurate; O-allyl-, methallyl-crotyl-, O-alkyl-, aryl-, P-vinyl-P-allyl-, P-crotyl-, and P-methallyl-phosphonates; triallyl-, trimethallyl-, and tricrotyl-phosphates; O-vinyl-, O,O-diallyl-, dimethallyl-, and dicrotyl-phosphates; alkenyl and cycloalkenyl esters of acrylic, methacrylic, maleic (mono- and di-esters), fumaric (mono- and di-esters), and itaconic (mono- and di-esters) acids; vinyl ethers and vinyl thioethers of cycloalkenols and cycloalkene thiols; vinyl esters of cycloalkene carboxylic acids; 1,3-butadiene, isoprene and other conjugated dienes; paramethylstyrene; chloromethylstyrene; allyl-, methallyl-, and crotyl-mercaptan; bromotrichloromethane; bromoform; carbon tetrachloride; and carbon tetrabromide.

Additionally, the polyfunctional compound can be selected from the group consisting of ethyleneglycol dimethacrylate, diethyleneglycol dimethacrylate, triethyleneglycol dimethacrylate, polyethyleneglycol dimethacrylate, polypropyleneglycol dimethacrylate, neopentylglycol dimethacrylate, 1,3-butyleneglycol diacrylate, neopentylglycol diacrylate, trimethylolethane trimethacrylate, dipentaerythritol triacrylate, dipentaerythritol tetraacrylate, dipentaerythritol pentaacrylate, 1,3-butyleneglycol dimethacrylate, trimethylolpropane trimethacrylate, trimethylolpropane triacrylate, tripropyleneglycol diacrylate and divinyl benzene.

Preferred polyfunctional compounds suitable for use in this invention may be selected from the group consisting of allyl-, methallyl-, dicyclopentenyl-, crotyl- and vinyl-esters of acrylic acid, methacrylic acid, maleic acid (mono- and di-esters), fumaric acid (mono- and di-esters) and itaconic acid (mono- and di-esters); N- or N,N di-, methallyl-, crotyl- and vinyl-amides of acrylic acid and methacrylic acid; N-methallyl and crotyl-maleimide; alkenyl or cycloalkenyl esters of acrylic acid, methacrylic acid, maleic acid (mono- and di-esters), fumaric acid (mono- and di-esters, fumaric acid (mono- and di-esters), itaconic acid (mono- and di-esters); 1,3-butadiene; isoprene; divinyl benzene; methallyl-, crotyl- and allyl-mercaptan.

Preferably, the polyfunctional compound(s) should be present in an amount less than about 5 percent by weight of the shell, more preferably about 0.5 to about 3.0 percent of the shell. The most preferred polyfunctional compound is allyl methacrylate.

Optionally, the core polymer may be crosslinked, selecting polyfunctional compounds from the above-mentioned lists as is well-known in the art. The level of crosslinker may be from about 0 to about 10 percent, based on the weight of the core polymer, and preferably from about 0 to about 3 percent. The most preferred polyfunctional compounds are multi-acrylates and -methacrylates.

Suitable monomers for use in preparing the shell monomer of this invention include those listed above for the preparation of the core. However, it is critical to the preparation of core-shell polymers of this invention that higher levels of acid-containing monomers are used in the shell than in the core in order to induce alkali solubility. The shell polymer, referred to hereinafter also as the "first stage", is formed from a mixture of monomers comprising from 10 to 30 percent by weight of a carboxylic acid or anhydride, and from 90 to 30 percent of an alkyl acrylate or alkyl methacrylate or styrene, and from 0 to 40 percent of a hydroxyalkyl ester of a carboxylic acid or acrylamide or methacrylamide. Preferred levels of acid-containing monomer(s) for the shell range from about 15 to about 25 percent by weight of the shell polymer. The most preferred acid-containing monomers for use in preparing the shell polymer is methacrylic acid. Anhydrides, such as methacrylic anhydride, maleic anhydride and itaconic anhydride, may be used in place of the acid-containing monomers in the shell polymer. Preferably, the shell polymer comprises about 85 to about 40 percent by weight methyl methacrylate.

The shell polymer preferably has a weight average molecular weight of about 2,500 to about 12,000 as determined by gel permeation chromatography. Common chain transfer agents or mixtures thereof known in the art, such as alkylmercaptans, are employed to control molecular weight, preferably $C_1$-$C_6$ alkyl and alkyloxy mercaptans.

Based on equivalents of acid in the shell polymer, preferably from 0.8 to 1.2 equivalents of base are added to the shell, and more preferably about 0.9 to about 1.1 equivalents of base are added to the shell polymer compositions to neutralize and substantially, but not necessarily totally, dissolve the shell polymer so as to form a neutralized shell polymer and an aqueous solution of neutralized shell polymer. Polymerization of the core in the presence of the neutralized shell results in some of the shell polymer becoming permanently attached to the core. Bases which are suitable for use in this invention can be any kind of base, but is preferably selected from the group consisting of ammonia, triethylamine, monoethanolamine, dimethylaminoethanol, sodium hydroxide and calcium hydroxide and all other Group I A and II A hydroxides, and mixtures thereof.

4

EP 0 654 454 A1

The core shell polymers of the present invention are particularly useful as dry mortar modifiers for cementitious type materials. The polymers are easily isolatable by conventional methods such as spray drying to yield dry, free flowing powders which, upon admixture with cementitious compositions, provide superior physical properties and performance characteristics such as flexibility, adhesion and water resistance when used in high humidity-type environments.

Additives

The redispersible core-shell polymer powder of the present invention may be formulated for the chosen end-use. Additives such as thickeners, protective colloids, dispersants, anti-freeze agents, plasticizers, adhesion promoters, coalescents, wetting agents, defoamers, colorants, non-aldehyde-based biocides, soaps and slip agents may be incorporated in the core shell polymer latex or powder, at levels from about 0 weight percent to about 10 weight, preferably from about 0 weight percent to about 5 weight percent based on the total weight of the core-shell polymer. Additive levels above 10 weight percent should be avoided due to the susceptibility of core shell polymer to water sensitivity.

The examples which follow are intended to further illustrate the present invention.

## EXAMPLES

### Example 1

968.6 g of deionized (DI) water was charged to a 5 liter, 4-necked round bottom flask equipped with a mechanical stirrer, condenser and appropriate fittings to produce a nitrogen blanket over the reaction mixture. The kettle contents were then heated to 75°C. A monomer emulsion (ME #1) was then charged to the kettle followed by an initiator. A few minutes after the temperature leveled off, a neutralizer was added which solubilized the polymer. Approximately 102 g of ME #2 was then added to the kettle followed by an APS initiator charge. The balance of the ME #2 was then gradually added to the same kettle containing the solubilized polymer at a rate so that the reaction temperature stayed in the neighborhood of 80°C to 85°C. The kettle contents were then cooled to 65°C and additional initiator was added to reduce residual monomers to low levels.

| Material | ME #1 | ME #2 |
|---|---|---|
| DI $H_2O$ | 85 | 336 |
| Pluronic L31 (L31) | 31.9 | 10.1 |
| 58% Alipal CO-436 | 1.2 | --- |
| 28% Sodium Lauryl Sulfate (SLS) | --- | 9.6 |
| Butyl Acrylate (BA) | 53.7 | 913.2 |
| Methyl Methacrylate (MMA) | 209.8 | 429.7 |
| Methacrylic Acid (MAA) | 67.2 | --- |
| Allyl Methacrylate (ALMA) | 5.0 | --- |
| Methyl-3-Mercaptopropionate (MMP) | 11.8 | --- |
| Rinse DI H2O | 47.0 | 70 |
| | 512.6 | 1754.6 |

### ME #1 Initiator

1.0 g of 1.0% Solution of $FeSO_4.7H_2O$ (keep acid with $H_2SO_4$) in 8 g of DI $H_2O$.
4.8 g of 70% t-Butyl Hydroperoxide (t-BHP) in 19 g of DI $H_2O$.
3.1 g of Sodium Sulfoxylate Formaldehyde (SSF) in 35 g of DI $H_2O$.

5

Neutralizer

14.4 g of Ca(OH)$_2$ and 31.2 g of 50% NaOH in 105 g of DI H$_2$0; rinse of 33 g DI H$_2$O.

ME #2 Initiator

1.3 g of Ammonium Persulfate (APS) in 114 g DI H$_2$O for the kettle charge and 5.4 g of APS in 105 g DI H$_2$O for a cofeed.

Final Solution of 30 g DI H$_2$O

Final Polymer Characterization

Percent Solids: 46.3
Particle Size (Brookhaven BI-90): 165 nm
pH: 7.3
Viscosity: 39 cps

Examples 2 and 3

Proceeding as in Example 1, the composition of ME #1 was varied as follows:

| Example | #1 | #2 | #3 |
|---|---|---|---|
| Changes in ME #1 | | | |
| BA | 53.7 | --- | --- |
| MMA | 209.8 | 223.2 | 143.0 |
| EHA | --- | 40.3 | --- |
| EA | --- | --- | 120.5 |
| Latex Characterization | | | |
| Solids (%) | 46.3 | 47.2 | 46.6 |
| Particle Size (nm) (Brookhaven BI-90) | 165 | 178 | 205 |
| pH | 7.3 | 7.4 | 7.3 |
| Viscosity (cps) | 39 | 47 | 87 |

Application Examples of Flexible Powders

| Flexible Ceramic Tile Thinset Mortar Formulation: | |
|---|---|
| sand 60 mesh | 150 |
| Portland Cement Type 1 | 100 |
| Polymer Powder | 20 |
| defoamer | 2 |
| calcium silicate | 5 |
| HEC thickener | 0.6 |
| water | 54 |

Test Method: ASTM D 790

Specimen Thickness: 1/8"

Mortar Properties

| Powder | Example 1 | Example 2 | Example 3 | (Comparative) | |
|---|---|---|---|---|---|
| | | | | VAE[1] | VA/VeoVA/BA[2] |
| Tg (DCS, onset) | -11°C | -11°C | -11°C | -7°C | +6°C |
| Calc. Tg of ASR | +80°C | +80°C | +60°C | ------ | ------ |

[1] Airlflex RP-245 manufactured by Air Products.
[2] Elotex AP 200 manufactured by Ebnoether.

**Flexure Properties:**

| 1) 14 day air cure: | | | | | |
|---|---|---|---|---|---|
| stress @ max. (psi) | 640 | 600 | 330 | 1420 | 1270 |
| strain @ max. (%) | 0.8 | 0.5 | 1.1 | 0.3 | 0.2 |
| modulus @ 0.05% strain (ksi) | 470 | 560 | 400 | 1060 | 91 |

| 2) 7 day air cure + 7 days in 70°C water: | | | | | |
|---|---|---|---|---|---|
| stress @ max. (psi) | 800 | 800 | 730 | 1030 | 1640 |
| strain @ max. (%) | 0.4 | 0.4 | 0.5 | 0.3 | 0.1 |
| modulus @ 0.05% strain (ksi) | 770 | 700 | 590 | 1070 | 1580 |

**Claims**

1. A core-shell polymer powder obtainable by a two-stage aqueous emulsion sequential polymerization method comprising:

(a) forming in a first stage a mixture of monomers comprising from 10 to 30 percent of a carboxylic acid or anhydride, from 90 to 30 percent of an alkyl acrylate or alkyl methacrylate or styrene, and from 0 to 40 percent of a hydroxyalkyl ester of a carboxylic acid or acrylamide or methacrylamide,

(b) polymerizing the mixture from (a) to form a shell polymer,

(c) neutralizing the shell with an amine or a base; and in a second stage,

(d) forming a mixture of monomers comprising from 90 to 100 percent of an alkyl acrylate or methacrylate or styrene and from 0 to 10 percent of a hydroxyalkyl ester of a carboxylic acid or acrylamide or methacrylamide to produce a calculated Tg of 0°C to (minus) -65°C;

(e) combining the mixture of the second-stage monomers with the neutralized polymer of the first stage;

(f) polymerizing the combined monomers of the second stage to form the aqueous emulsion core-shell polymer; and,

(g) converting the aqueous emulsion core-shell polymer by spray-drying into a redispersable polymer powder.

2. The core-shell polymer powder of Claim 1, wherein the weight ratio of the core to the shell is from 95:05 to 60:40, the core having an average molecular weight of greater than 100,000 and the shell having an average molecular weight of 2,500 to 12,000 for the hydrolyzed shell, as determined by gel permeation chromatography.

3. The core-shell polymer powder of Claims 1or 2, wherein the Tg of the shell is greater than 50°C, preferably greater than 60°C, and the Tg of the core is from (minus) -10 to (minus) -25°C.

4. The core-shell polymer powder of Claims 1,2 or 3, wherein the mixture of monomers comprising the shell are 10 to 30 percent of a carboxylic acid or anhydride and from 90 to 70 percent of an alkyl acrylate or alkyl methacrylate or styrene, based on the total weight of the shell; and wherein the mixture of monomers preferably comprises methyl methacrylate, butyl acrylate and methacrylic acid, or methyl methacrylate, ethyl acrylate and methacrylic acid.

5. The core-shell polymer powder of Claims 1,2,3 or 4, wherein the mixture of monomers comprising the shell have been neutralized with a base selected from the group consisting of ammonia, triethylamine, monoethanolamine, dimethylaminoethanol, sodium hydroxide and calcium hydroxide and all other Group I A and II A hydroxides and mixtures thereof; and wherein the base is preferably a mixture of sodium hydroxide and calcium hydroxide.

6. The core-shell polymer powder of Claim 1,2 or 3, wherein the mixture of monomers comprising the core are 0 to 5 percent of a carboxylic acid or anhydride or acrylamide or methacrylamide and from 95 to 100 percent of an alkyl acrylate or alkyl methacrylate or styrene, based on the total weight of the core; and the preferred mixture of monomers comprising the core are butyl acrylate and methyl methacrylate.

7. The core-shell polymer powder of any one of the preceding claims, wherein the mixture of monomers comprising the shell and the core are selected from the group consisting of methyl acrylate, ethyl acrylate, butyl acrylate, 2-ethylhexyl acrylate, decyl acrylate, methyl methacrylate, ethyl methacrylate, hydroxyethyl methacrylate, hydroxypropyl acrylate, hydroxypropyl methacrylate, butyl methacrylate, acrylonitrile, acrylic acid, methacrylic acid, itaconic acid, maleic acid, fumaric acid, acrylic anhydride, methacrylic anhydride, maleic anhydride, itaconic anhydride, styrene, substituted styrene, vinyl acetate and other $C_1$ to $C_{12}$ alkyl acrylates and methacrylates, acrylamide, methacrylamide, N-methylol methacrylamide, and N-methylol acrylamide.

8. The core-shell polymer powder of any one of the preceding claims, wherein the first-stage monomer mixture is polymerized in the presence of a polyfunctional compound; and wherein the polyfunctional compound is preferably selected from the group consisting of polyfunctional compounds having two or more sites of unsaturation, reactive chain transfer agents having two or more abstractable atoms and hybrid polyfunctional compounds having one or more sites of unsaturation and one or more abstractable atoms; and wherein the polyfunctional compound is more preferably allyl methacrylate.

9. The core-shell polymer powder of Claim 8, wherein the polyfunctional compound comprises from less than 5 percent, preferably from 0.5 to 3.0 percent, based on the total weight of the shell.

10. A method for modifying a cementitious composition, comprising admixing the core-shell polymer powder of any one of the preceding claims with Portland Cement and adding to admixture to the cementitious composition.

11. A product made by the method of Claim 11, comprising a core-shell polymer powder having an alkali-soluble emulsion polymer shell and an alkali-insoluble emulsion polymer core, and wherein the core and the shell polymers are chemically grafted by utilizing a polyfunctional compound.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 522 791 (ROHM AND HAAS COMPANY) *The whole document* | 1-11 | C04B24/26 C08F265/06 C08F257/02 C08F265/04 C08F2/22 |
| X | EP-A-0 555 959 (ROHM AND HAAS COMPANY) *The whole document* | 1-11 | |
| X | EP-A-0 348 565 (ROHM AND HAAS COMPANY) * claims * * examples 5,11 * | 1-11 | |
| D | & US-A-4 916 171 | | |

TECHNICAL FIELDS
SEARCHED      (Int.Cl.6)

C04B
C08F

The present search report has been drawn up for all claims

| Place of search | Date of completion of the search | Examiner |
|---|---|---|
| THE HAGUE | 6 March 1995 | Persson, E |

EPO FORM 1503 03.82 (P04C01)